# EUROPÄISCHE PATENTANMELDUNG

(11) **EP 3 537 577 A1**
(43) Veröffentlichungstag der Anmeldung: **11.09.2019**
(21) Anmeldenummer: 18160756.5
(22) Anmeldetag: 08.03.2018
(51) Int. Cl.: H02K 9/06, H02K 9/28

(54) **SCHLEIFRINGEINHEIT MIT AKTIVEM KÜHLSYSTEM**

(71) Anmelder: Siemens Aktiengesellschaft, 80333 München (DE)
(72) Erfinder: Binder, Herbert, 94127 Neuburg (DE)

(57) **Zusammenfassung**

Die Erfindung betrifft eine Schleifringeinheit (1) für eine elektrische Maschine, wobei die Schleifringeinheit (1) zur Aufnahme einer Bürstenhaltevorrichtung (2) vorgesehen ist. Für eine sichere und effektive Kühlung von in der Bürstenhaltevorrichtung (2) anordenbaren Schleifringbürsten wird vorgeschlagen, dass die Bürstenhaltevorrichtung (2) Kühlluftleitungen (3) aufweist zur gezielten Zuführung von Kühlluft (5) zu den in der Bürstenhaltevorrichtung (2) anordenbaren Schleifringbürsten. Bevorzugt weist die Bürstenhaltevorrichtung (2) Kühlluftkanäle (6) auf, die jeweils mindestens eine Eintrittsöffnung (11) zur Sammlung von Kühlluft und jeweils mindestens eine Luftaustrittsöffnung (10) zur Zuführung der in den Luftkanälen gesammelten Kühlluft zu den jeweils in Bürstentaschen (4) der Bürstenhaltevorrichtung (2) anordenbaren Schleifringbürsten.

## Beschreibung

Die Erfindung betrifft eine Schleifringeinheit für eine elektrische Maschine, wobei die Schleifringeinheit zur Aufnahme einer Bürstenhaltevorrichtung vorgesehen ist. Die Erfindung betrifft weiter eine elektrische Maschine mit einer derartigen Schleifringeinheit.

Eine derartige Schleifringeinheit für eine elektrische Maschine kommt beispielsweise bei Windkraftanlagen zum Einsatz. Hier besteht der Bedarf, dass die elektrischen Maschinen in Form der Generatoren und ihrer Komponenten immer kompakter werden. Dies führt dazu, dass bei gleichbleibender Baugröße die Schleifringkomponenten immer höher belastet werden, da die Temperaturen, insbesondere von Schleifringen, Schleifringbürsten und Schleifringbürstenhalter häufig stark ansteigen. Somit besteht ein Bedarf, sämtliche Komponenten der elektrischen Maschine, insbesondere auch die Schleifringeinheit möglichst effizient zu kühlen.

Der Erfindung liegt die Aufgabe zu Grunde, eine Schleifringeinheit derart zu verbessern, dass auf einfache und kostengünstige Weise eine gleichmäßige Temperaturverteilung der Schleifringeinheit und somit eine möglichst effektive Kühlung der elektrischen Maschine ermöglicht wird.

Diese Aufgabe wird durch eine Schleifringeinheit mit den im Anspruch 1 angegebenen Merkmalen gelöst.

Der Erfindung liegt die Erkenntnis zugrunde, dass das thermische Verhalten einer elektrischen Maschine dadurch optimiert werden kann, dass gezielt Kühlluftleitungen vorgesehen werden, zur gezielten Führung von Kühlluft zu in der Bürstenhaltevorrichtung anordenbaren Schleifringbürsten. Durch derartige Kühlluftleitungen kann das thermische Verhalten der Schleifringeinheit und somit auch der elektrischen Maschine in der Weise optimiert werden, dass die Schleifringeinheit kleiner gewählt werden kann, als dies ohne aktives Kühlsystem, welches durch die an bzw. in der Bürstenhaltevorrichtung vorgesehenen Kühlluftleitungen der Fall wäre. Der zusätzliche Aufwand an Kühlluftleitungen erfordert dabei geringe Materialkosten im Gegensatz zu höheren Materialkosten infolge eines größeren Außenmaßes einer kompletten elektrischen Maschine. Durch die gezielte Kühlung der Schleifringbürsten kommt es zu einer deutlichen Reduktion der Temperaturen in diesem Bereich, so dass durch die niedrigere Temperatur kleinere Baugrößen der Schleifringeinheit und der direkt angrenzenden Komponenten ermöglicht werden. Darüber hinaus kann der Schleifringkörper bzw. die Schleifringeinheit mit mehr Bürsten pro Phase betrieben werden, was sonst ohne direkte und aktive Kühlung der Bürsten nur schwer oder sogar unmöglich wäre. Somit sind bei gleicher Leistungsstufe kleinere Baugrößen möglich.

Vorteilhafte Ausgestaltungsformen sind in den Unteransprüchen enthalten.

Eine gezielte Zuführung von eines Kühlluftstroms zu hitzemäßig stark belasteten Bereichen der Schleifringeinheit insbesondere im Bereich der Schleifringbürsten kann vorteilhafterweise gezielt dadurch erfolgen, dass die Bürstenhaltevorrichtung Kühlluftkanäle aufweist, die jeweils mindestens eine Eintrittsöffnung zur Sammlung von Kühlluft und jeweils mindestens eine Luftaustrittsöffnung zur Zuführung der in den Luftkanälen gesammelten Kühlluft zu den jeweils in Bürstentaschen anordenbaren Schleifringbürsten. Hierdurch kommt es zu einem gezielten Zusammenwirken der Kühlluftleitungen mit in der Bürstenhaltevorrichtung angeordneten Kühlluftkanälen.

Der Kühlluftstrom kann auf einfache Weise aufwandsarm dadurch erzielt werden, dass die Schleifringeinheit einen Lüfter aufweist und/oder mit einem Lüfter koppelbar ist. Dabei ist der insbesondere ohnehin vorhandene Lüfter der elektrischen Maschine zur Erzeugung eines Luftvolumenstroms zur Kühlung der Bürstenhaltevorrichtung vorgesehen ist.

Der Kühlluftstrom wird vorteilhafter Weise dadurch erzielt, dass die Schleifringeinheit ein Schleifringgehäuse aufweist, wobei das Schleifringgehäuse eine Lufteintrittsöffnung aufweist zur Zuführung von Kühlluft über einen Zuluftkanal zum Kühlluftkanal.

Der Kühlluftkanal kann ohne großen Zusatzaufwand dadurch in synergistischer Weise geschaffen werden, dass der Kühlluftkanal als Teil einer Bürstenbrücke ausgebildet ist. Eine derartige Bürstenbrücke ist meist ohnehin zur Verbindung der einzelnen Bürstenhalter erforderlich.

Eine derartige Doppelfunktionalität in Form einer mechanischen Kopplung sowie als gezielte Luftzuführung wird in einfacher Art und Weise dadurch sichergestellt, dass die Bürstenbrücke einen ersten Teilbereich zur elektrischen Verkabelung der Schleifringbürste und einen zweiten Teilbereich, der als Kühlluftkanal wirkt, aufweist.

Im Folgenden wird die Erfindung anhand der in den Figuren dargestellten Ausführungsbeispiele näher beschrieben und erläutert.

Es zeigen:
- FIG 1: einen Ausschnitt einer Schleifringeinheit mit aktivem Kühlsystem,
- FIG 2: eine Schleifringeinheit mit aktivem Kühlsystem in Gesamtsicht und
- FIG 3: eine Detailansicht einer Bürstenhaltevorrichtung mit Kühlluftkanal und zugehörigen Kühlluftleitungen.

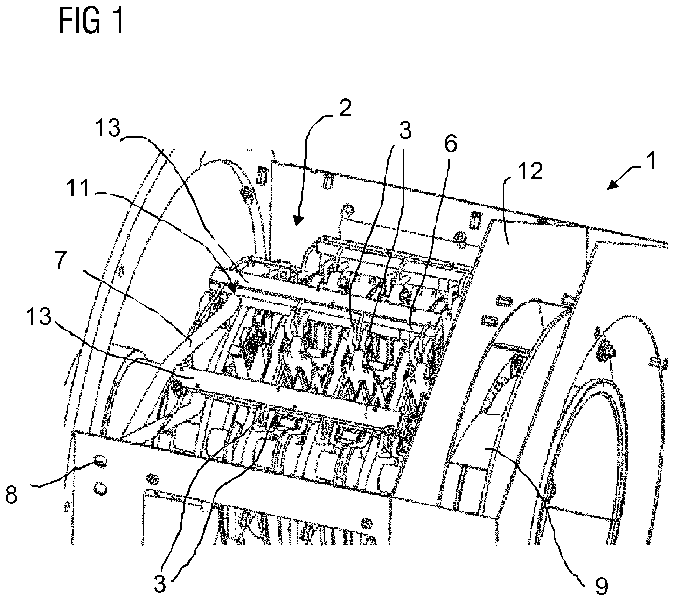

FIG 1 zeigt einen Ausschnitt einer Schleifringeinheit 1 mit aktivem Kühlsystem. Die Schleifringeinheit 1 besteht im Wesentlichen aus einem Schleifringgehäuse 12, in dem eine Bürstenhaltevorrichtung 2 sowie ein Lüfter 9 angeordnet sind. Das Schleifringgehäuse 12 weist im vorderen Bereich eine Lufteintrittsöffnung 8 auf, welche über einen Zuluftkanal 7 mit einem Kühlluftkanal 6 einer Bürstenbrücke 13 in Wirkverbindung gekoppelt ist.

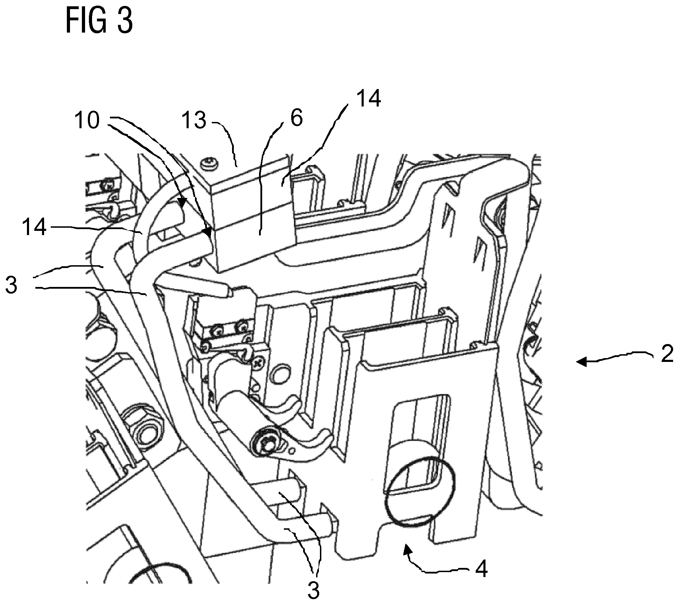

Die Besonderheit der in FIG 1 dargestellten Schleifringeinheit mit aktivem Kühlsystem besteht darin, dass bei der Schleifringeinheit 1 eine gezielte Kühlung, der in FIG 1 aus Gründen der Übersichtlichkeit nicht näher dargestellten Schleifringbürsten, erfolgt. Hierzu wird gezielt Kühlluft über die Lufteintrittsöffnung 8 sowie die daran angeschlossenen Zuluftkanäle 7 an den Kühlluftkanal 6 der Bürstenbrücke 13 geleitet. Dieser Kühlluftvolumenstrom wird dann über Luftaustrittsöffnungen 10 am Kühlluftkanal 6 und die an die Luftaustrittsöffnungen 10 angeschlossenen Kühlluftleitungen 3 weitergeleitet (vgl. auch Fig. 3). Die Kühlluftleitungen 3 lenken diesen Kühlluftstrom direkt an die in FIG 1 nicht weiter dargestellten Schleifringbürsten. Somit entsteht im Zusammenwirken mit dem Lüfter 9, der im Wesentlichen der Abfuhr der erwärmten Luft dient, ein aktives Kühlsystem, so dass Überhitzungen vermieden werden und auch für sämtliche Betriebszustände zulässige Temperaturbereiche erzielt werden.

Die kühle Luft wird somit einerseits über die Kühlluftöffnungen der Schleifringeinheit 1 angesaugt. Der zweite Weg bildet sich über die Zuluftkanäle 7, die über eigene Kühlluftöffnungen in Form des Lufteintritts 8 an der Schleifringeinheit 1 versorgt werden. Aufgrund dieser separaten Zusatzkanäle an der Bürstenbrücke 13 kann jede einzelne Bürste von hier aus auch einzeln mit Kühlluft versorgt werden. Hierzu dienen die eigenen Kühlluftverrohrungen in Form der Kühlluftleitungen 3.

Bei dem in FIG 1 dargestellten Ausführungsbeispiel erfolgt die Zuführung der Kühlluft über den in der Bürstenbrücke 13 integrierten Kühlluftkanal 6. Alternativ könnte eine aktive Kühlluftversorgung auch in die Schleifringkapsel und nicht in die Bürstenbrücke 13 integriert werden. Mit Hilfe dieser Kühlluftführungen kann die Kühlluft nun direkt an jede Kontaktstelle jeder Schleifringbürste im kompletten System gelenkt werden. Hierdurch liegen die Oberflächen der kritischen Teile direkt im zugeführten Kaltluftstrom. Dies wird unterstützt durch den in der Schleifringeinheit 1 standardmäßig enthaltenen Radiallüfter 9. Die Kühlluft wird somit direkt an die "heißen" Stellen des Systems, also an die Schleifringbürsten geführt. Die erwärmte Luft wird nun von dem Schleifringlüfter 9 angesaugt und über den Luftstrom durch das Lüftergehäuse aus dem Schleifringraum in die Umgebung abgeführt. Somit werden direkt die Schleifringbürsten der Schleifringeinheit 1 gekühlt. Die Schleifringlaufflächen und Bürstentemperaturen bleiben durch diese Maßnahmen in einen betriebsgerechten Temperaturbereich und der Betrieb ist gegen Überhitzung geschützt. Somit können also wesentlich kleinere, günstigere Bauteile verwendet werden und dennoch bleibt der problemlose Betrieb gewährleistet.

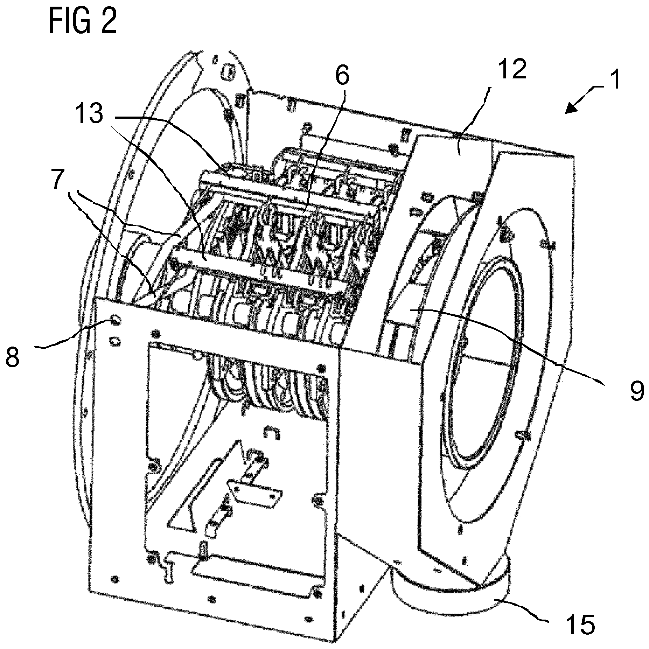

FIG 2 zeigt eine Schleifringeinheit 1 mit aktivem Kühlsystem in der Gesamtansicht. Dabei werden wiederum die bereits im Zusammenhang mit FIG 1 eingeführten Bezugszeichen verwendet, so dass zur Vermeidung von Wiederholungen auch auf die zugehörige Beschreibung zu FIG 1 verwiesen wird. In FIG 2 wird nochmals das Zusammenwirken mit dem Lüfter 9 ersichtlich, der über einen Luftaustritt 15 die erhitzte Luft aus dem Gehäuse 12 der Schleifringeinheit 1 befördert.

FIG 3 zeigt eine Detailansicht einer Bürstenhaltevorrichtung 2 mit Kühlluftkanal 6 und zugehörigen Kühlluftleitungen 3. Wiederum werden die bereits im Zusammenhang mit den Figuren 1 und 2 eingeführten Bezugszeichen verwendet. Aus dieser Detailansicht der FIG 3 wird insbesondere ersichtlich, dass der Kühlluftkanal 6 einen ersten Teilbereich 14 zur elektrischen Verkabelung der Schleifringbürste, die im Bereich einer Bürstentasche 4 angeordnet ist, sowie einen zweiten Teilbereich, der als Kühlluftkanal 6 wirkt, aufweist.

Zusammenfassend betrifft die Erfindung somit eine Schleifringeinheit 1 für eine elektrische Maschine, wobei die Schleifringeinheit 1 zur Aufnahme einer Bürstenhaltevorrichtung 2 vorgesehen ist. Für eine sichere und effektive Kühlung von in der Bürstenhaltevorrichtung 2 anordenbaren Schleifringbürsten wird vorgeschlagen, dass die Bürstenhaltevorrichtung 2 Kühlluftleitungen 3 aufweist zur gezielten Zuführung von Kühlluft zu den in der Bürstenhaltevorrichtung 2 anordenbaren Schleifringbürsten. Bevorzugt weist die Bürstenhaltevorrichtung 2 Kühlluftkanäle 6 auf, die jeweils mindestens eine Lufteintrittsöffnung 11 zur Sammlung von Kühlluft und jeweils mindestens eine Luftaustrittsöffnung 10 zur Zuführung der in den Luftkanälen gesammelten Kühlluft zu den jeweils in Bürstentaschen 4 der Bürstenhaltevorrichtung 2 anordenbaren Schleifringbürsten.

## Patentansprüche

1. Schleifringeinheit (1) für eine elektrische Maschine, wobei die Schleifringeinheit (1) zur Aufnahme einer Bürstenhaltevorrichtung (2) vorgesehen ist,
wobei die Bürstenhaltevorrichtung (2) Kühlluftleitungen (3) aufweist zur gezielten Zuführung von Kühlluft (5) zu in der Bürstenhaltevorrichtung (2) anordenbaren Schleifringbürsten.

2. Schleifringeinheit (1) nach Anspruch 1,
wobei die Bürstenhaltevorrichtung (2) Kühlluftkanäle (6) aufweist, die jeweils mindestens eine Lufteintrittsöffnung (11) zur Sammlung von Kühlluft und jeweils mindestens eine Luftaustrittsöffnung (10) zur Zuführung der in den Kühlluftkanälen (6) gesammelten Kühlluft zu den jeweils in Bürstentaschen (4) der Bürstenhaltevorrichtung (2) anordenbaren Schleifringbürsten.

3. Schleifringeinheit (1) nach einem der Ansprüche 1 oder 2, wobei die Schleifringeinheit (1) einen Lüfter (9) aufweist und/oder mit einem Lüfter (9) koppelbar ist.

4. Schleifringeinheit (1) nach Anspruch 3,
wobei der Lüfter (9) zur Erzeugung eines Luftvolumenstroms zur Kühlung der Bürstenhaltevorrichtung (2) vorgesehen ist.

5. Schleifringeinheit (1) nach einem der vorhergehenden Ansprüche,
wobei die Schleifringeinheit (1) ein Schleifringgehäuse (12) aufweist, wobei das Schleifringgehäuse (12) eine Lufteintrittsöffnung (8) aufweist zur Zuführung von Kühlluft über einen Zuluftkanal (7) zum Kühlluftkanal (6).

6. Schleifringeinheit (1) nach einem der vorhergehenden Ansprüche,
wobei der Kühlluftkanal (6) als Teil einer Bürstenbrücke (13) ausgebildet ist.

7. Schleifringeinheit (1) nach einem der vorhergehenden Ansprüche,
wobei die Bürstenbrücke (13) einen ersten Teilbereich zur elektrischen Verkabelung der Schleifringbürste und einen zweiten Teilbereich, der als Kühlluftkanal (6) wirkt, aufweist.

8. Elektrische Maschine mit einer Schleifringeinheit (1) nach einem der vorhergehenden Ansprüche.
